# EUROPEAN PATENT APPLICATION

(11) **EP 1 600 843 A1**
(43) Date of publication of application: **30.11.2005**
(21) Application number: 04012447.1
(22) Date of filing: 26.05.2004
(51) Int. Cl.: G06F 1/16, H04M 1/02

(54) **HANDHELD ELECTRONIC DEVICE WITH KEYBOARD**

(71) Applicant: High Tech Computer Corp., Tao Yuan (TW)
(72) Inventor: Wang, John, C., Tao Yuan (TW)
(74) Representative: Becker Kurig Straus

(57) **Abstract**

A handheld electronic device has a body (110) and a sliding member (120) wherein the body is pivotably mounted on the sliding member by a pivot axle (102). The body is provided with a display (140) thereon, and the sliding member is provided with a keyboard (142) thereon. When the sliding member is lengthwise aligned with the body, the keyboard is hidden below the body. When the sliding member is rotated relative to the body to reach a position wherein the sliding member is at an orientation perpendicular to that of the body, the keyboard is exposed and has two end portions located outside of lateral sides of the body, respectively.

## Description

### BACKGROUND OF THE INVENTION

### Field of the Invention

This invention generally relates to a handheld electronic device, and more particularly to a handheld electronic device having a body and a sliding member pivotably connected together, wherein the body is provided with a display and the sliding member is provided with a keyboard. The sliding member is pivotable relative to the body between closed and opened positions. At the closed position, the sliding member is hidden below the body, and at the opened position, the sliding member is exposed and extends across a part of the body.

### Description of Related Art

A handheld electronic device is a miniature, portable electronic device, such as a mobile phone, a handheld PC, or a personal digital assistant (PDA). Since a handheld electronic device applies to wireless communication and Internet fields, mobile communication processing is thus provided for convenience and efficiency, and becomes one of the most popular high-tech electronic products. However, since a handheld device only has a palm size, wherein a display of the device occupies most of the area, area available for a keyboard thereof is small; the keyboard thus cannot be provided with a large number of keys, which is disadvantageous when a user needs to input text message into the handheld device. To solve this problem, conventional art introduces a number of solutions as described below. provided with a large number of keys, which is disadvantageous when a user needs to input text message into the handheld device. To solve this problem, conventional art introduces a number of solutions as described below.

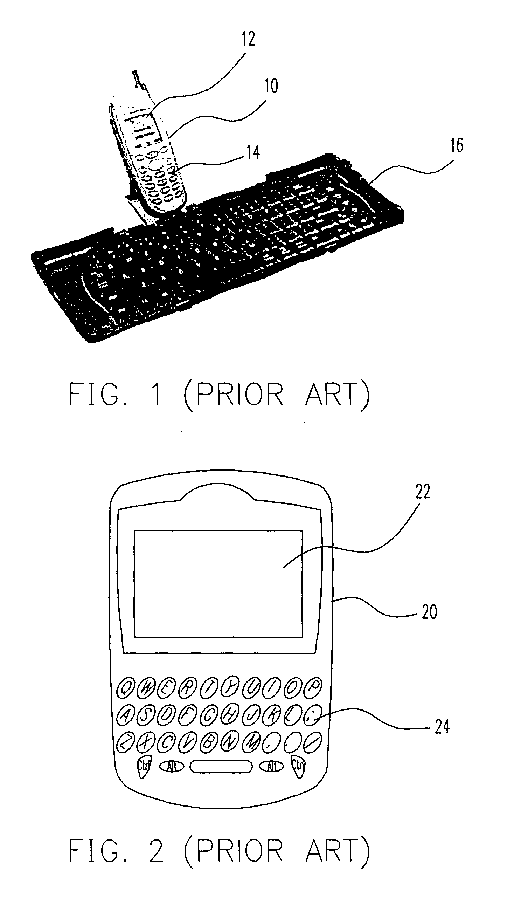

**FIGs. 1~3** illustrate three conventional handheld devices each having a keyboard suitable for entering text messages to the respective handheld device. Referring to **FIG. 1,** a mobile phone **10** is shown. The mobile phone 10 has a display **12** and a keyboard **14** below the display **12.** The area available for the keyboard **14** only allows a few keys to be provided to the keyboard **14,** i.e., ten number keys and several function keys (including an on/off key). Such a keyboard **14** is inconvenient for a user to input text messages to the mobile phone **10.** Thus, a large external keyboard **16** is provided in the market to come up with input inconvenience to the mobile phone **10.** Yet the large external keyboard **16** occupies too much space, which is not valid for portable purpose. Furthermore, to simultaneously carry the mobile phone **10** and the external keyboard **16** is not convenient.

Referring to **FIG. 2**, a wireless e-mail device **20** is shown. The device **20** is designed widened laterally, whereby it can have a wider display **22** and a larger area below the display **22** to receive a keyboard **24.** The keyboard **24** can accommodate more keys to construct a QWERTY keyboard so that a user of the device **20** can easily input a text message. Although the handheld device **20** of **FIG. 2** can solve the inconvenience of the mobile phone **10** of **FIG. 1,** which needs an external keyboard **16,** the increase of the width of the device **20** causes the device **20** to be too bulky, which is opposite to the compact trend of the handheld device. Furthermore, the increase of width brings inconvenience for the user to hold the device **20** by his (her) palm.

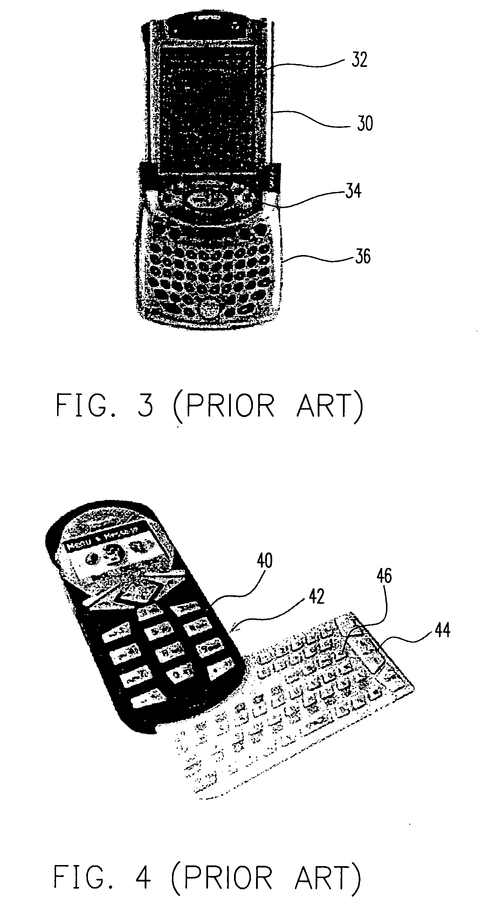

Furthermore, refer to **FIG. 3,** where a PDA **30** is illustrated. The PDA **30** has a display **32** and a couple of function keys **34** disposed below the display **32.** Although the PDA **30** is equipped with a stylus (not shown) which can be used for text message input, since stylus input is not as quickly as keyboard input, an external QWERTY keyboard **36** is provided for the PDA **30** so that a user can use the keyboard **36** to input the text message. Like the mobile phone **10** of **FIG. 1,** it is troublesome for the user to simultaneously carry two apparatuses (i.e., PDA **30** and keyboard **36).**

Another type of conventional handheld device is disclosed in US Design Patent No. D421983, entitled "Cellular Telephone with Pivoted Keyboard", which has a keyboard pivotally connected to a back of a body of the cellular telephone. The pivot axle is located at a corner area of the keyboard, so that the keyboard is pivoted to expose a plurality of keys at a lateral side of the mobile phone for data input. Moreover, referring to **FIG. 4,** another cellular telephone **40** with a pivoted keyboard **44** is disclosed. The keyboard **44** is accommodated within a recess **42** of the body **40** and can be pivoted out of the recess **42.** The keyboard **44** has a pivot axle located at a corner area thereof and connecting with a body of the telephone **40,** so that the keyboard **44** can be rotated out of the recess **42** to expose a plurality of keys **46** at a lateral side of the telephone **40** for data input.

It is noted that the foregoing pivoted keyboard **44** is shaped as elongated thin slice, and the pivot axle is also disposed at a corner area of the keyboard **44.** If not being enhanced sturdiness of the body of the keyboard **44,** the pivot axle does not manage to uphold the weight of the body **40** of the mobile phone, whereas one hand of the user holds the bottom of the body **40,** and another hand serves to input data. Therefore, ergonomics is not complied with the operation, and slow data input with single hand is caused. Furthermore, for such handheld electronic devices of US Design Patent No. D421983 and **FIG. 4,** as one hand is needed to hold the body of the device, the user cannot use both thumbs to input the text messages, which is found as the most efficiently key-in method for the small keyboards. In addition, since the keyboards are entirely located at a lateral side of the bodies of the devices, it is not convenient for the user to watch the displays while keying the text messages to check out the correctness of his (her) typing.

### SUMMARY OF THE INVENTION

An object of the present invention is to provide a handheld electronic device having a pivotal structure pivotably connecting a sliding member and a body of the handheld electronic device together wherein the sliding member is provided with a keyboard thereon. The pivotal structure is so located that after the sliding member is rotated related to the body, the sliding member extends across a part of the body to cause the device to have an inverted "T" configuration, whereby a user of the device can easily use his (her) two thumbs to type the keyboard so that a text message can be quickly entered into the device.

Another object of the present invention is to provide a handheld electronic device having a pivotal structure pivotably connecting a body and a sliding member of the handheld electronic device together. The body has a display thereon and the sliding member has a keyboard thereon. The pivotable structure is so located that after the sliding member is rotated related to the body, the sliding member extends across the body and the body is located at a median of a top of the sliding member whereby the a user can readily type with the keyboard while look at the display.

In order to comply with the foregoing purposes, the present invention provides a handheld electronic device having a body and a sliding member and a pivotal structure, wherein the pivotal structure pivotably connects the sliding member and the body together. In addition, the body possesses a first geometry center, and the sliding member possesses a second geometry center, and the first geometry center and the second geometry center are coincidental when the sliding member is entirely hidden below the body (i.e. closed position). The pivotal structure includes a pivot axle, which has a first pivot joint and a second pivot joint, where the first pivot joint is disposed on a bottom surface of the body, and the second pivot is disposed on a top surface of the sliding member. The pivot axle is not disposed at the second geometry center or the first geometry center, and at the closed position an included angle between a connecting line from the pivot axle to the second geometry center or the first geometry center and a geometrical center line of the device is 45 degrees. When the sliding member rotates by 90 degrees with respect to the body to an opened position, the first geometric center of the body and the second geometric center of the sliding member are separated and aligned on the geometrical center line of the device so that the sliding member has two ends located laterally out of two lateral sides of the body, respectively.

In a further aspect of the present application, a handheld electronic device is provided, including a body and a sliding member. The body has a bottom surface, the sliding member has a pivotal structure, and the sliding member is pivotally connected to the bottom surface of the body. The body has a longitudinal central line, which is aligned with a longitudinal central line of the sliding member when the sliding member is located at a closed position. After the sliding member is rotated relative to the body for 180 degrees from the closed position to an opened position, the longitudinal central lines are offset from each other a distance, and upper and lower ends of the sliding member are located out of upper and lower ends of the body, respectively.

According to the further aspect of the present invention, the body has a display for displaying data. Moreover, the sliding member has a Qwerty keyboard for text data input. At the closed position, the keyboard has some keys exposed below the display, for functioning as a mobile phone keypad. Accordingly, at the closed position, the handheld electronic device of the present application can be used as a mobile phone. At the opened position, keys which are hidden below the body when the sliding member is at the closed position, are exposed so that a user of the handheld electronic device can easily type a text message to the device by using the Qwerty keyboard. At the opened position, the handheld electronic device of the present invention can be used as a wireless e-mail machine.

The above is a brief description of some deficiencies in the prior art and advantages of the present invention. Other features, advantages and embodiments of the invention will be apparent to those skilled in the art from the following description, accompanying drawings and appended claims.

### BRIEF DESCRIPTION OF THE DRAWINGS

**FIGs. 1** to **3** are diagrams illustrating three mobile phones and keyboard assemblies thereof according to conventional schemes.

**FIG. 4** is a diagram illustrating a mobile phone with a pivoted keyboard according to prior art.

**FIGs. 5A~5B** are top view diagrams illustrating a handheld electronic device according to a first preferred embodiment of the present invention at different operating positions.

**FIGs. 6A~6B** are side view diagrams of **FIGs. 5A** and **5B,** respectively.

**FIGs. 7A~7B** are top view diagrams illustrating a handheld electronic device according to a second preferred embodiment of the present invention at different operating positions.

**FIGs. 8A~8C** are top view diagrams of a handheld electronic device according to a third preferred embodiment of the present invention at different operating positions.

**FIGs. 9A~9C** are top view diagrams illustrating a handheld electronic device according to a fourth preferred embodiment of the present invention at different operating positions.

**FIGs. 10A~10B** are top view diagrams illustrating a handheld electronic device according to a fifth preferred embodiment of the present invention at different operating positions.

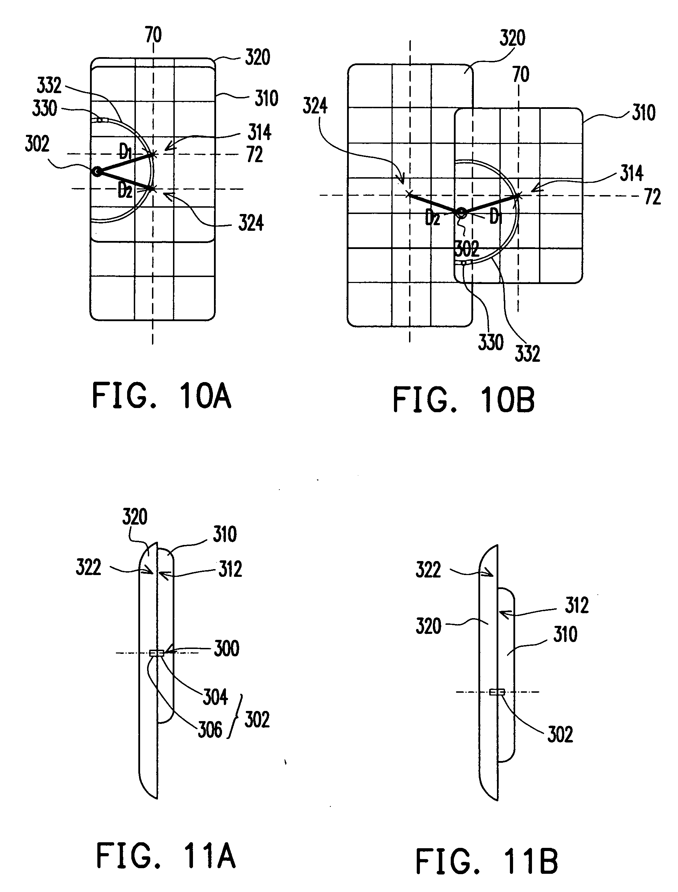

**FIGs, 11A~11B** are side view diagrams of **FIGs. 10A** and **10B,** respectively.

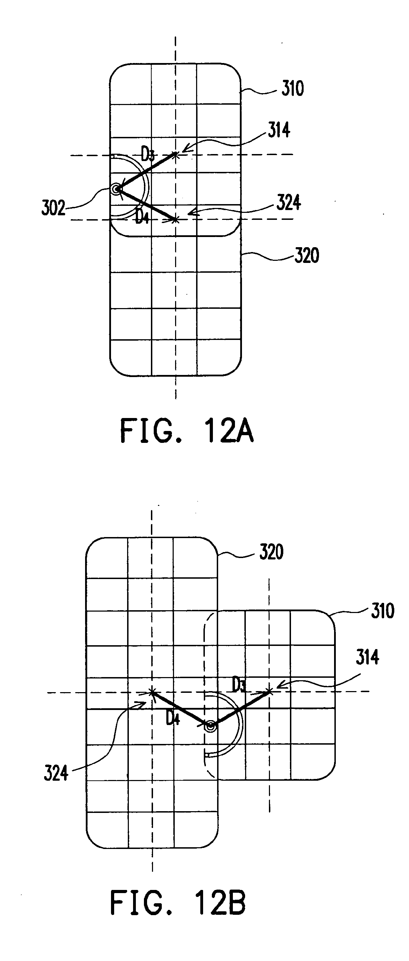

**FIGs. 12A~12B** are top view diagrams illustrating a handheld electronic device according to a sixth preferred embodiment of the present invention at different operating positions.

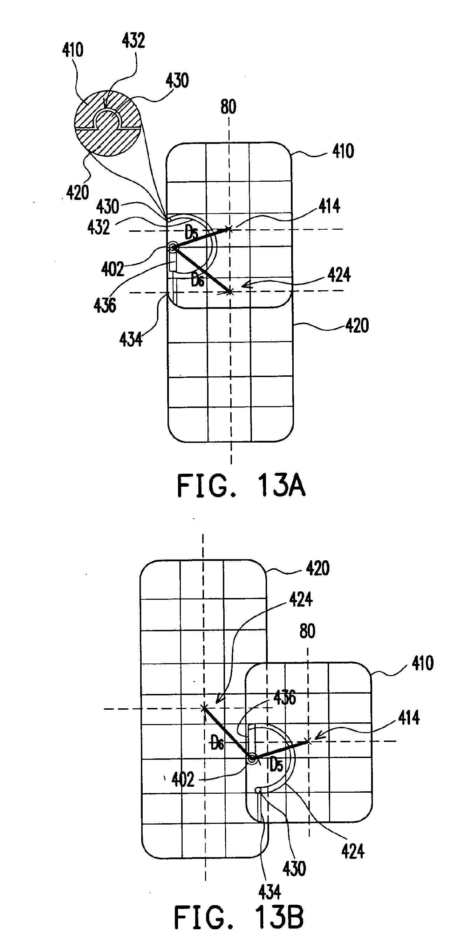

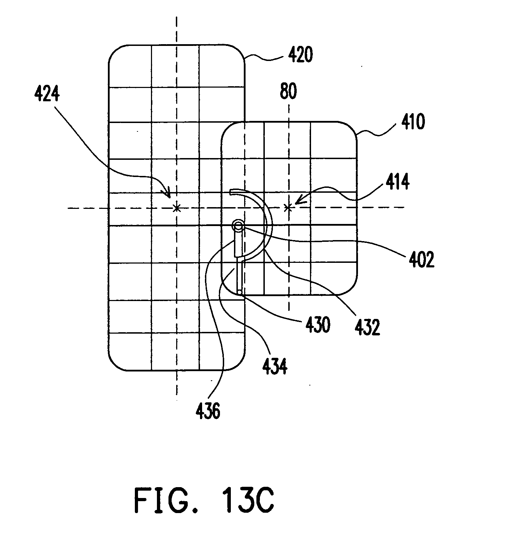

**FIGs. 13A, 13B** and **13C** are top view diagrams illustrating a handheld electronic device according to a seventh preferred embodiment of the present invention at different operating positions.

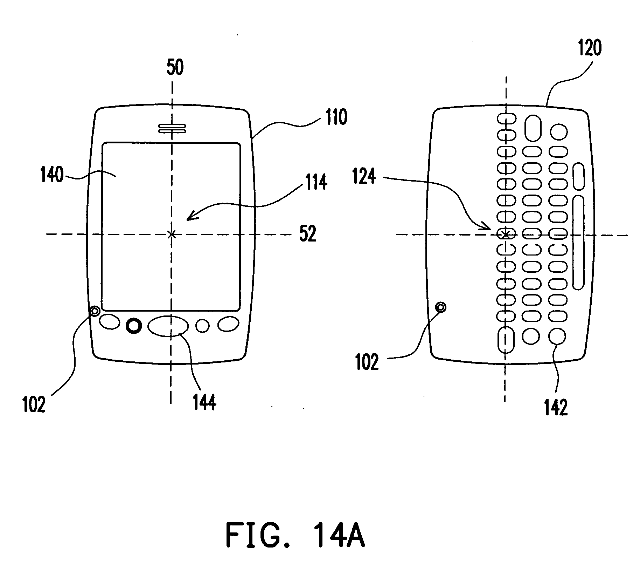

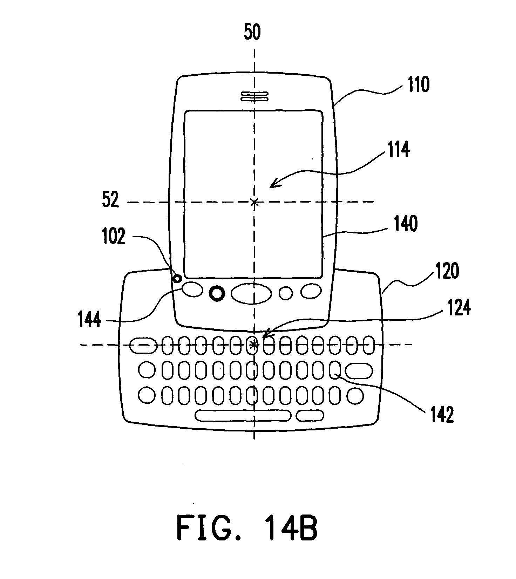

**FIGs. 14A** and **14B** are diagrams illustrating a practical application of the handheld electronic device of the first preferred embodiment of the present invention as a PDA.

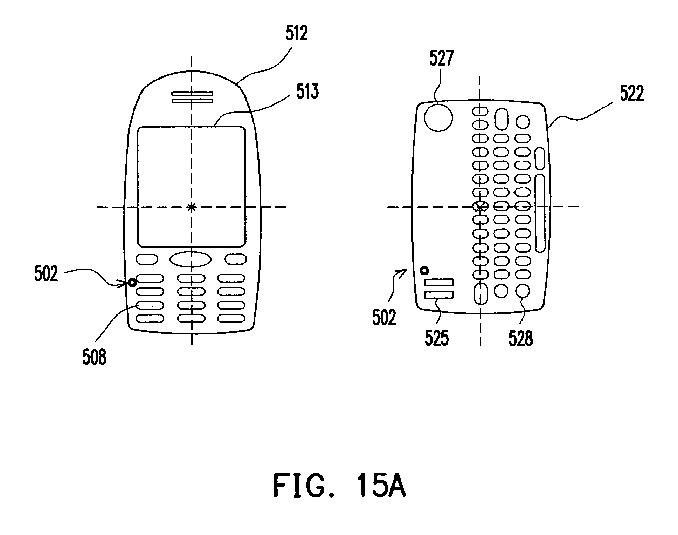

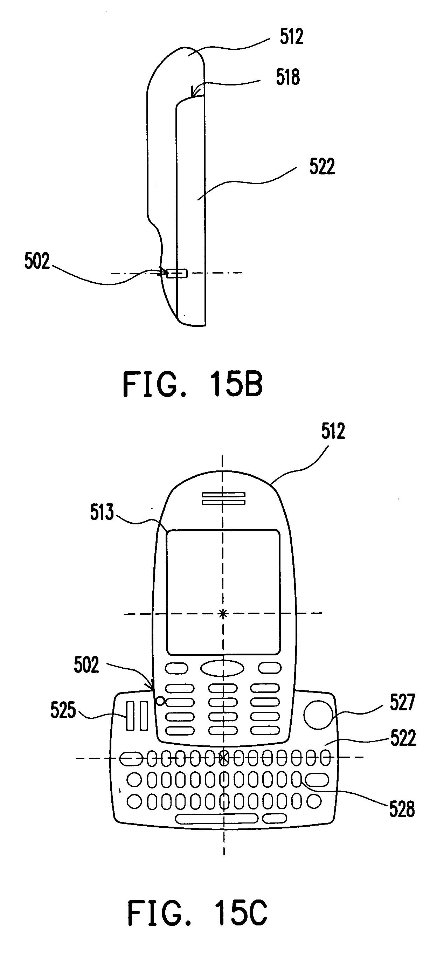

**FIGs. 15A, 15B** and **15C** are diagrams of a body, a sliding member and a combination of the body and the sliding member of a handheld electronic device according to an eighth preferred embodiment of the present invention.

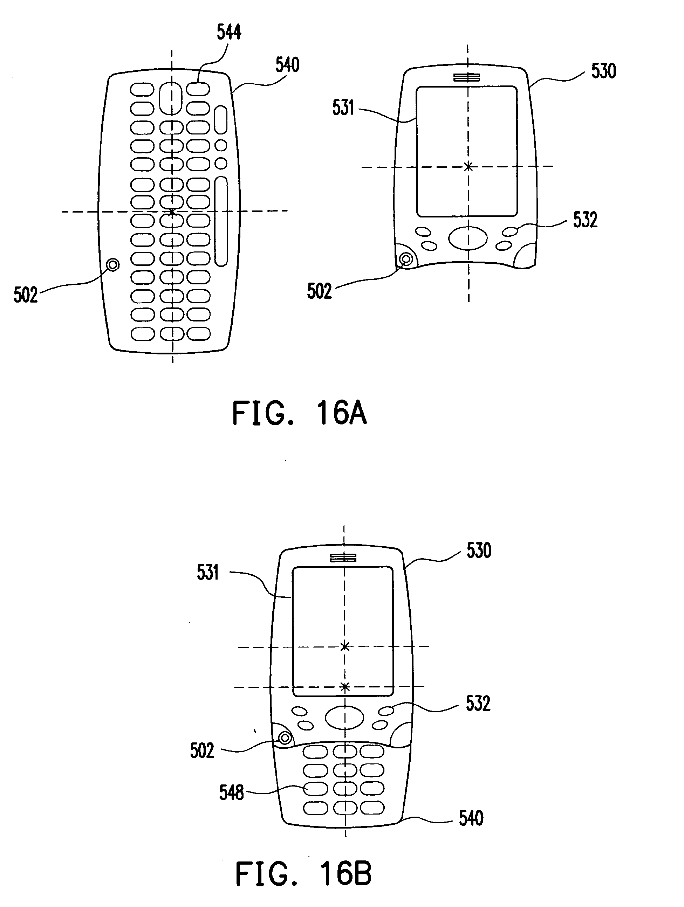

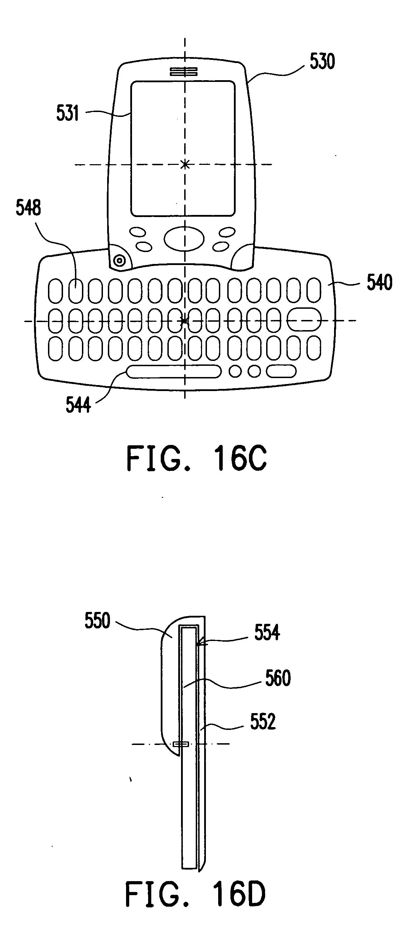

**FIGs. 16A, 16B** and **16C** are diagrams of a body, a sliding member and a combination of the body and the sliding member of a handheld electronic device according to a ninth preferred embodiment of the present invention.

**FIGs. 16D** is a side view diagram illustrating a variation of the handheld electronic device of the ninth embodiment of the present invention.

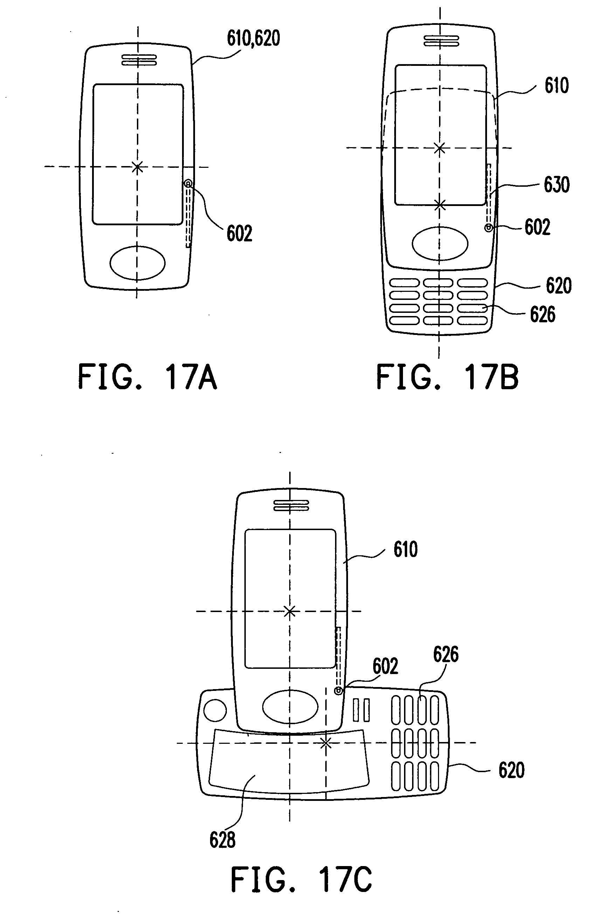

**FIGs. 17A, 17B** and **17C** are diagrams of a handheld electronic device according to a tenth embodiment of the present invention at different operating positions.

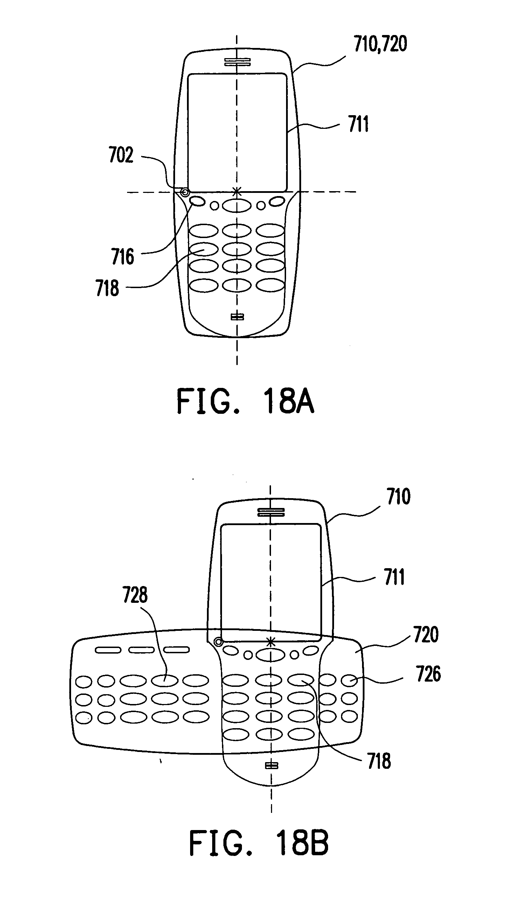

**FIGs. 18A** and **18B** are diagrams illustrating a handheld electronic device according to an eleventh preferred embodiment of the present invention at different operating positions.

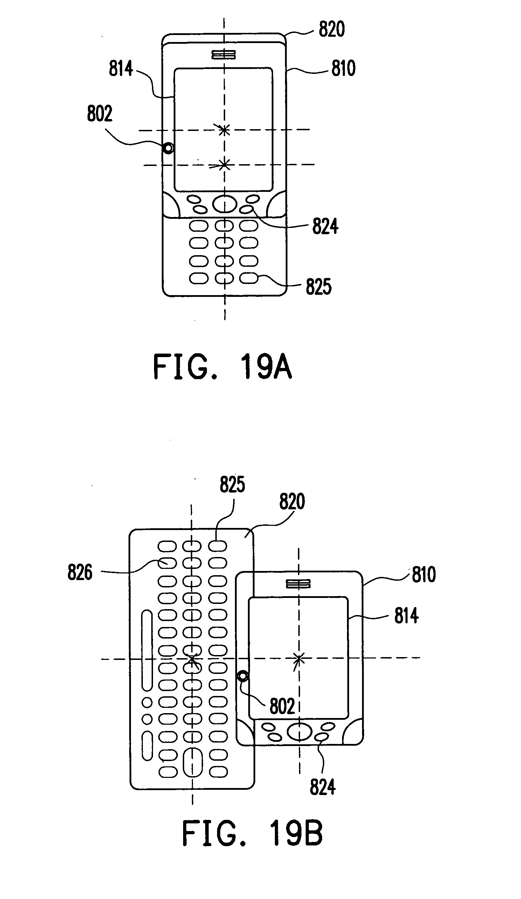

**FIGs. 19A** and **19B** are diagrams illustrating a practical application of the handheld device of the fifth embodiment of **FIGs. 10A~11B** as a wireless PDA phone.

### DESCRIPTION OF THE PREFERRED EMBODIMENTS

First Preferred Embodiment

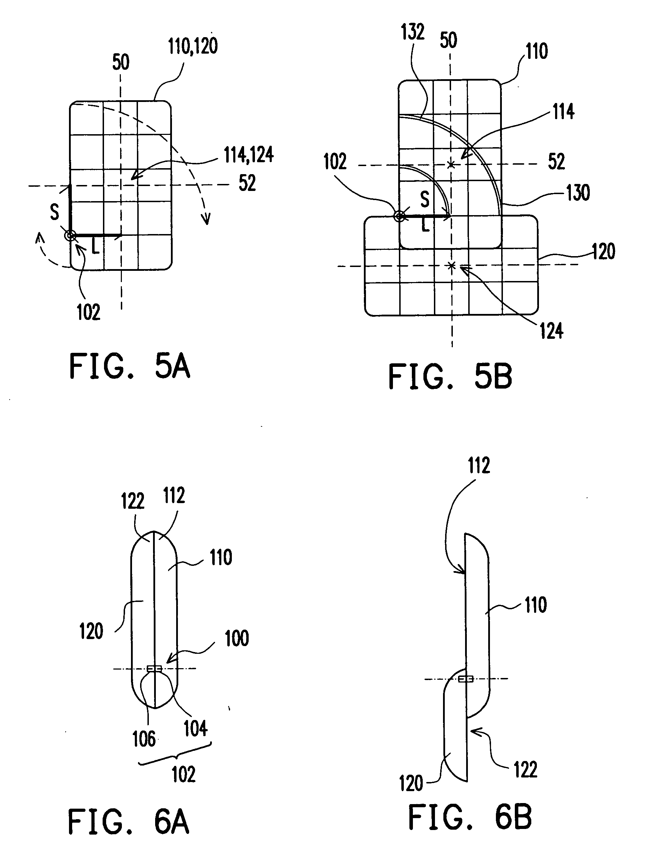

Referring to **FIGs. 5A~6B,** a handheld electronic device in accordance with a first embodiment of the present invention is shown.

Please refer to **FIG. 5A** and **FIG. 6A** firstly. A pivotal structure **100** is disposed between a body **110** and a sliding member **120,** a bottom surface **112** of the body **110** is against a top surface **122** of the sliding member **120,** and the sliding member **120** is pivotally connected to the body **110** through the pivotal structure **100.** In this preferred embodiment, the body **110** and the sliding member **120** are similar in size, curvature, corner radian, and thickness, so that the body **110** and the sliding member **120** are consistent in profile, whereas the profile is categorized into elongated shape. However other shapes of the body **110** or the sliding member **120** are within the scope of this present invention, for example, regular polygon (equivalent triangle, equivalent tetragon, equivalent pentagon, etc.), or circle and ellipse, also fall within the scope of the present invention. In this preferred embodiment, an elongated shape of the body **110** and the sliding member **120** are exemplary for following descriptions of various constructions of the present invention.

The pivotal structure **100** includes a pivot axle **102,** which has a first pivot joint **104** and a second pivot joint **106.** The first pivot joint **104** is disposed on the bottom surface **112** of the body **110** and the second pivot joint **106** is disposed in the top surface **122** of the sliding member **120,** so that the body **110** and the sliding member **120** can rotate relative to each other. Moreover, the body **110** and the sliding member **120** have a first geometric center **114** and a second geometric center **124** respectively, which are imposed and aligned along a vertical geometric center line **50** of the handheld electronic device when the handheld electronic device is at a deployed (opened) position as shown in **FIG. 5B.** Furthermore, the centers **114, 124** are coincidental at an intersection of the vertical central line 50 and a horizontal central line **52** when the device is at a folded (closed) position as shown in **FIG. 5A.** The intersection of the two lines **50** and **52** is defined as a geometric center of the electronic device. The pivot axle **102** is not disposed on the geometric center of the electronic device, and the pivot axle **102** and the two geometric center lines **50** and **52** are distanced by L and S, respectively, where L=S. Since the pivot axle **102** is not located at the geometric center of the handheld electronic device, when the sliding member **120** rotates with respect to body **110** about the pivot axle **102** (e.g. clockwise rotation), the geometric center **124** of the sliding member **120** varies its position corresponding to the rotational angle. When the sliding member **120** rotates by 90 degrees, the geometric center **124** of the sliding member **120** is aligned with the geometric center **114** of the body **110** along the vertical geometric center line **50** to form a symmetrical construction, which is shown in **FIG. 5B.** As shown in **FIG. 5B,** the sliding member **120** is located in a horizontal orientation at a lower portion of the body **110,** with two ends of the sliding member **120** protruding out of two lateral sides of the body **110** equidistantly.

Still refer to **FIG. 5B.** It is noted that when the sliding member **120** rotates by 90 degrees, the lengthwise sides of which are horizontally fixed to the lower portion of the body **110,** and perpendicular to the lengthwise sides of the body **110,** so that the ends of the sliding member **120** are respectively protruded out of the two lengthwise (lateral) sides of the body **110.** Different from the prior art, the pivotal structure **100** in accordance with the present invention makes the geometric center **124** of the sliding member **120** located at a point of the vertical geometric center line **50** of the handheld electronic device after the sliding member **120** is rotated by 90 degrees to the opened position. Thus, the handheld electronic device in accordance with the present invention can achieve the feature that the ends of the sliding member **120** symmetrically protrude out of the two lengthwise sides of the body **110,** respectively, after the sliding member **120** is rotated 90 degrees relative to the body **110.** The geometry of the handheld electronic device in accordance with the present invention after the sliding member **120** is rotated relative to the body **110** by 90 degrees is decided by the location of the pivot axle **102** which can vary in accordance with actual requirement, and an aspect ratio of the handheld electronic device. Different geometry of the handheld electronic device due to different locations of the pivot axle **102** and different aspect ratios of the handheld electronic device are disclosed in the following descriptions. In the following descriptions, the body **110** and the sliding member **120** have the same size. In the first embodiment, in order to facilitate a smooth rotation of the sliding member **120** relative to the body **110,** two arched tracks **132** are defined in the bottom surface **112** of the body **110** and two engaging members **130** are formed on the top surface **122** of the sliding member **120** movably fitting in the tracks **132,** respectively.

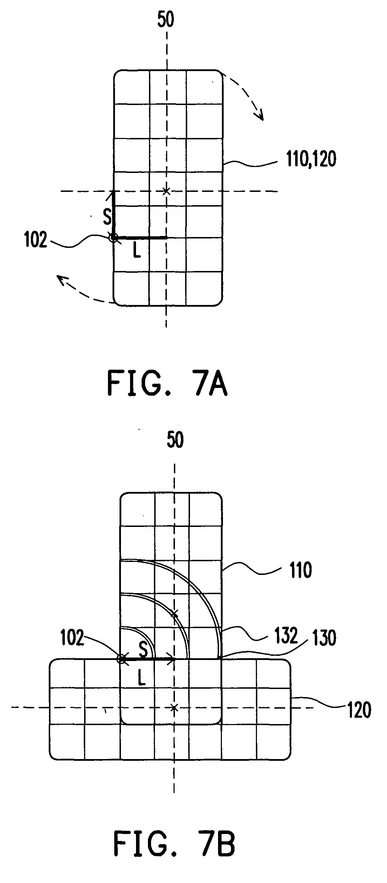

Referring to **FIGs. 7A** and **7B,** a handheld electronic device in accordance with a second embodiment of the present invention is shown. The device has an increased length in comparison with that of the first embodiment, i.e., the aspect ratio of the handheld electronic device in accordance with the first embodiment being about 5:3, whereas the aspect ratio of the handheld electronic device in accordance with the second embodiment is about 7:3. It is noted that however the two embodiments share a common feature that the distance L from the pivot axle **102** to the vertical geometric center line **50** of the handheld electronic device is equal to the distance S from the pivot axle **102** to the horizontal geometric center line **52.**

In this embodiment, since the handheld electronic device has a large aspect ration (length/width), after the sliding member **120** is rotated to a horizontal orientation, the ends of the sliding member **120** protruding out of the lateral sides of the body **110** have a larger distance than that in the first embodiment.

Furthermore, in this embodiment, there are three guiding tracks **132** defined in the bottom surface of the body **110** and three engaging members **130** formed on the top surface of the sliding member **120** for movably engaging with the guiding tracks **132.**

The Third And Fourth Preferred Embodiments

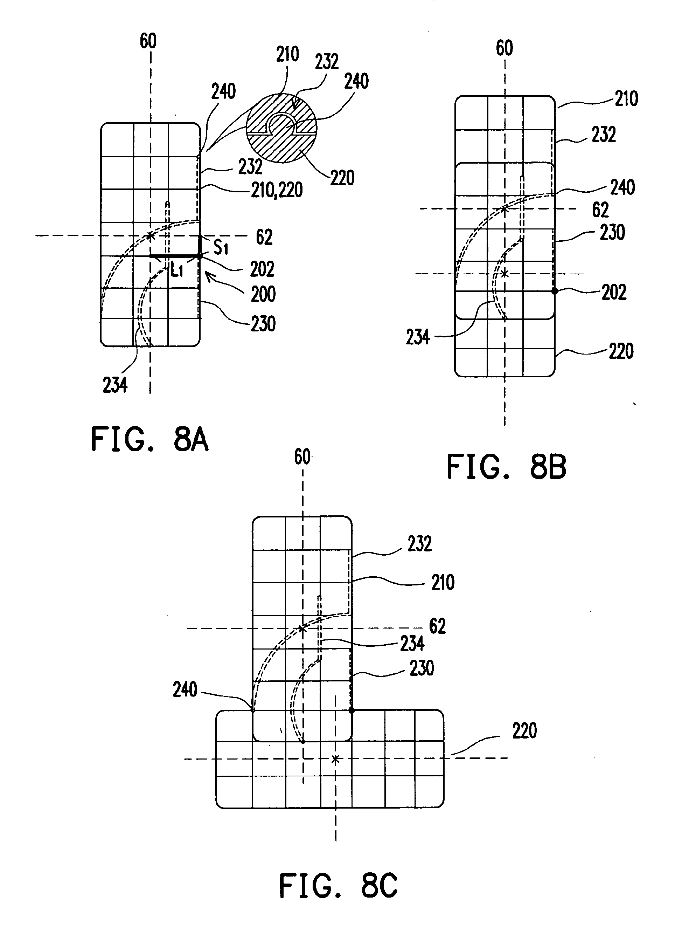

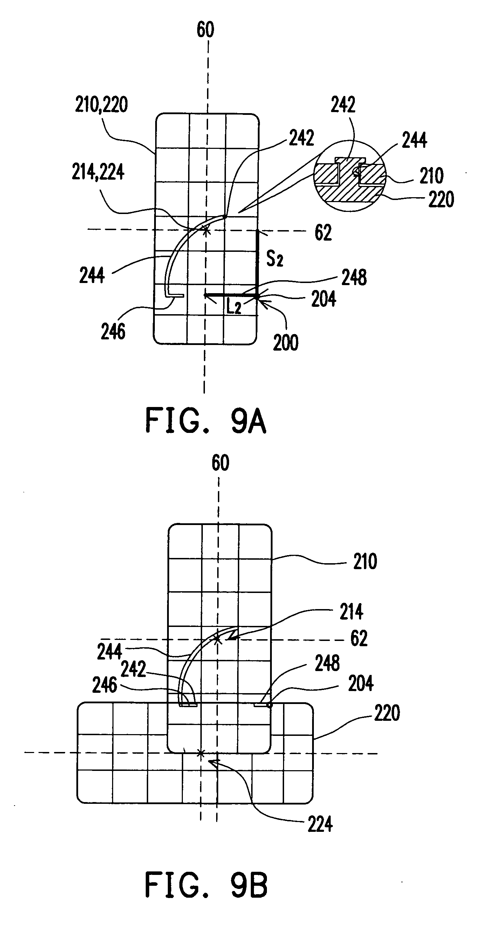

**FIGs. 8A~8C** illustrate a handheld electronic device according to a third preferred embodiment of this present invention, whereas **FIGs. 9A~9C** illustrate a handheld electronic device according to a fourth preferred embodiment of this present invention. The handheld electronic devices of the third and fourth embodiments possess the same size; yet the pivot axles of the two embodiments are located differently and the guiding structures thereof are also different from each other so that the two embodiments have different geometry after the sliding members are extended from the bodies of the handheld electronic devices. In **FIG. 8A,** the distance L1 between a pivot axle **202** of a pivotal structure **200** and a vertical geometric center line **60** is larger than the distance S1 between the pivot axle **202** and a horizontal geometric center line **62.** In **FIG. 9A,** a distance L2 between the pivot axle **204** of the pivotal structure **200** and the vertical geometric center line **60** is smaller than the distance S2 between the pivot axle **204** and the horizontal geometric center line **62.**

Furthermore, a guiding structure is disposed on the bottom surface of the body **210** and the top surface of the sliding member **220** in the third preferred embodiment. The guiding structure includes a plurality of guiding tracks **230, 232, 234,** which are recessed in the bottom surface of the body **210.** The guiding track **230** has a configuration of a straight line, while the other two tracks **232, 234** each have a straight section and an arched section. The guiding track **230** has a length, which is substantially the same as that of straight sections of the guiding tracks **232, 234.** Referring to **FIG. 8A,** an enlarged cross-sectional diagram for a part of the handheld electronic device is shown in a circle. An engaging member **240** is formed on a top surface of the sliding member **220** movably fitting into the guiding track **232** of the body **210.** In **FIGs. 8A~8B,** the pivot axle **202** is received in the guiding track **230.** To extend the sliding member **220** from the body **210,** firstly the sliding member **220** is motivated to move downwardly relative to the body **210** so that the pivot axle **202** and the engaging members **240** are moved from upper ends of the guiding track **230** and the straight sections of the guiding tracks **232, 234** to reach bottom ends thereof as shown in **FIG. 8B.** At this position, a lower end of the sliding member **220** protrudes beyond a lower end of the body **210.** Thereafter, the sliding member **220** is rotated relative to the body **210** to reach the position as shown in **FIG. 8C.** The sliding member **220** is rotated by 90 degrees counterclockwise, and the engaging members **240** move from upper ends to lower ends of the arched sections of the sliding rail **232, 234,** so that two ends of the sliding member **220** protrude out of two lateral sides of the body **210.** In this embodiment, the distances of the ends of the sliding member **220** protruding out of the body **210** are not equal to each other, i.e., the right end having a longer length protruding out of the lateral side of the body **220** than the left end, as shown in **FIG. 8C.**

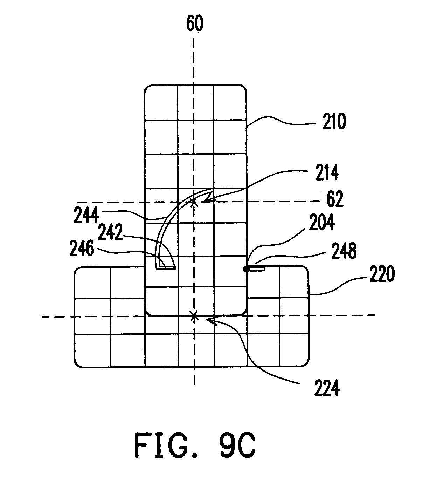

Please refer to **FIG. 9A,** where an enlarged cross-sectional diagram of a part of the handheld electronic device is shown in a circle. In this embodiment, the handheld electronic device has a pivotal structure **200** having a pivot axle **204,** a vertical central line **60** and a horizontal central line **62.** The body **220** has a center **214.** The sliding member **220** has a center **224.** The body **220** has a guiding track **244,** which is a slit defined through the body **220.** The sliding member **220** has a guiding track **248** defined therein. The engaging member **242** extends through the corresponding guiding track **244.** The guiding track **244** has an arched section and a straight section **246** extending horizontally at a lower end of the arched section. The guiding track **248** is straight and horizontally extended, and has a length which is substantially the same as that of the straight section **246** of the guiding track **244.** Moreover, in **FIGs. 9A** and **9B,** the pivot axle **204** is received in the guiding track **248.** In operation to extend the sliding member **220** from the body **210,** first the sliding member **220** is rotated relative to the body **210** about the pivot axle **204** to reach a position in which the engaging member **242** reaches the lower end of the arched section of the guiding track **244.** Then the sliding member **220** is moved rightwards to reach the position as shown in **FIG. 9C.**

The Fifth And Sixth Preferred Embodiment

**FIGs. 10A~10B** illustrate top view diagrams of a handheld electronic device according to a fifth preferred embodiment of this present invention. **FIGs. 11A~11B** illustrate side view diagrams of the handheld electronic device of **FIG. 10A** and **FIG. 10B** respectively. Moreover, **FIGs. 12A** and **12B** illustrate top view diagrams of a handheld electronic device according to a sixth preferred embodiment of the present invention.

Referring to **FIGs. 10A** and **11A** firstly. The handheld electronic device has a pivotal structure **300** disposed between a body **310** and a sliding member **320,** where a top surface **322** of the sliding member **320** is pivoted to the bottom surface **312** of the body **310** via the pivotal structure **300.**

The pivotal structure **300** includes a pivot axle **302,** which has a first pivot joint **304** and a second pivot joint **306.** The first pivot joint **304** is disposed in the bottom surface **312** of the body **310,** and the second pivot joint **306** is disposed in the top surface **322** of the sliding member **320,** so that the body **310** and the sliding member **320** can rotate relative to each other. Moreover, the body **310** and the sliding member **320** respectively have a first geometric center **314** and a second geometric center **324,** which are aligned along a vertical geometric center line **70** of the handheld electronic device when the sliding member **310** is not extended from the body **320** as shown in **FIG. 10A.** The geometric centers **314, 324** are spaced from each other a distance. The first and second geometric centers **314** and **324** are distanced to the pivot axle **302** by D1 and D2 respectively, where D1=D2. Since the pivot axle **302** is not located at the geometric center **324** of the sliding member **320,** when the sliding member **320** rotates about the pivot axle **302** for 180 degrees clockwise, the position of the geometric center **324** of the sliding member **320** is changed to be at a left side of the geometric center **314** of the body **310** and aligned therewith along a horizontal central line **72.** The sliding member **320** is moved from an unfolded (closed) position of **FIG. 10A** to a deployed (opened) position of **FIG. 10B,** wherein in **FIG. 10A,** the sliding member **320** is located just below the body **310** and in **FIG. 10B** the sliding member **320** is located neighboring to a left side of the body **310.** In **FIG. 10B,** top and lower ends of the sliding member **320** are located beyond upper and lower ends of the body **310,** respectively.

Refer to **FIGs. 10B** and **11B** herein. It is noted that as the sliding member **320** rotates by 180 degrees, the lengthwise sides of the sliding member **320** are substantially parallel to the lengthwise sides of the body **310,** and the two ends of the sliding member **320** are protruded symmetrically beyond the two ends of the body **310.** A semicircular track **332** is defined in the bottom surface **312** of the body **310** and an engaging member **330** is formed on the top surface **322** of the body **320** and movably engages in the track **332.** At the unfolded position of **FIG. 10A,** the engaging member **330** engages in an upper end of the track **332.** During the rotation of the sliding member **320,** the engaging member **302** moves along the track **332.** And at the deployed position of **FIG. 10B,** the engaging member **330** reaches a lower end of the track **332.** By the guiding means consisting of the guiding track **332** and the engaging member **330,** the sliding member **320** can have a reliable and stable rotation relative to the body **310.**

The handheld electronic device in accordance with the sixth embodiment as shown in **FIGs. 12A** and **12B** are substantially the same as the fifth embodiment, except that the sixth embodiment has a longer sliding member **320** so that after the sliding member **320** is rotated 180 degrees from the position of **FIG. 12A** to reach the position of **FIG. 12B,** a distance of the upper and lower ends of the sliding member **320** protruding beyond the upper and lower ends of the body **310** is larger than that of the fifth embodiment. In the sixth embodiment, a distance **D3** between the pivotal axle **302** and a geometry center **314** of the body **310** is equal to a distance **D4** between the pivotal axle **302** and a geometry center **D4** of the sliding member **320.**

The Seventh Preferred Embodiment

Referring to **FIGs. 13A, 13B,** and **13C,** top view diagrams of a handheld electronic device according to a seventh preferred embodiment of the present invention are illustrated herein. A distance D5 between a pivot axle **402** and a geometric center **414** of a body **410** of the handheld electronic device is smaller than a distance D6 between the axle **402** and a geometric center **424** of a sliding member **420** of the handheld electronic device. When the sliding member **420** is rotated by 180 degrees, the geometric center **424** of the sliding member **420** moves from a first position in which the two centers **414, 424** align with each other along a vertical central line **80** of the device **(FIG. 13A)** to a second position in which the center **424** is moved to a left side of the center **414 (FIG. 13B).** In this preferred embodiment, a guiding structure is provided to facilitate the movement of the sliding member **420** relative to the body **410.** The guiding structure includes a plurality of sliding tracks **432, 434,** and **436,** where the sliding track **436** is defined through the sliding member **420** and the sliding tracks **432 and 434** are defined in a bottom surface of the body **410.** The tracks **434 and 436** are vertically straight, while the sliding track **432** has a configuration of a semicircle. The track **434** communicates with a lower end of the track **432.** The sliding member **420** is further provided with an engaging member **430** movably engaging in an upper end of the guiding track **432** at the position of **FIG. 13A.** After the sliding member **420** is rotated **180** degrees relative to the body **410** to reach the position of **FIG. 13B,** the engaging member **430** moves along the sliding track **432** to reach a lower end of the sliding track **432.** Meanwhile, the sliding track **436** which is originally located below the pivotal structure **400** as shown in **FIG. 13A** is located above the pivotal structure **400,** as shown in **FIG. 13B.** The engaging member **430** movably engages in the guiding track **432** in the bottom surface of the body **410.** In **FIGs. 13A** and **13B,** the pivot axle **420** is fixed, and when the sliding member **420** rotates by 180 degrees corresponding to the body **410,** the engaging member **430** moves from the upper end of the semicircular sliding track **432** to the lower end thereof. The two lengthwise ends of the sliding member **420** protrude out of the lengthwise ends of the body **410,** respectively, with different distances. It is noted that the sliding track **436** is opened in the siding member **420.** The sliding track **434** is defined in the bottom face of the body **410** and connects and vertically extends from the lower end of the sliding track **432.** As the sliding member **420** rotates relative to the body **410,** the sliding track **436** rotates accordingly. The sliding track **436** and the sliding track **434** are parallel to each other, and a center of the semicircular sliding track **432** is located at the pivot axle **402.** After the sliding member reaches the position of **FIG. 13B,** the sliding member **420** is further moved vertically downwards to reach the position of **FIG. 13C,** in which the engaging member **430** moves from the upper end of the sliding track **434** to the lower end thereof, and the pivot axle **420** also moves from the lower end the sliding track **436** to the upper end thereof; at this position, the upper and lower ends the sling member **420** protrude top and lower ends of the body **410** with equal distance.

Referring to **FIGs. 14A** and **14B,** the first embodiment of the present invention of **FIGs. 5A-5D** is practiced as a PDA, in which an LCD display **140** is mounted in the body **110** and five operation buttons **144** are positioned in the body **110** below the LCD display **140.** The sliding member **120** is provided with a keyboard **142,** which preferably is Qwerty keyboard. The pivot axle **102** for pivotably connecting the sliding member **120** and body **110** together is provided at a left, lower corner of the sliding member **120** and the body **110.** The sliding member **120** and the body **110** have the same size and shape; thus, when the body **110** is mounted on the sliding member **120** and lengthwise aligned therewith, the sliding member **120** is totally hidden below the body **110.** After the sliding member **120** rotates relative to the body **110** about the pivot axle **102** for 90 degrees from the position of **FIG. 14A** to reach the position of **FIG. 14B,** the sliding member **120** is located across a lower end of the body **110** so that the Qwerty keyboard **142** is located below the lower end of the body **110** and has two lateral portions located outside the lateral sides of the body **110,** respectively. For such configuration when the sliding member **120** is unfolded from the body **110,** a person can easily uses his (her) to two palms to hold two lateral ends of the sliding member **120** and his (her) two thumbs to enter the required typing on the Qwerty keyboard **142.** Furthermore, since the display **140** is located at a median of a top of the Qwerty keyboard **142,** when the user types the text message, he (she) can look at the display **140** to check the correctness of the typed text without any inconvenience.

Referring to **FIGs. 15A, 15B** and **15C,** a handheld device in accordance with an eighth embodiment of the present invention is shown. In this embodiment, the sliding member **522** is configured having a length smaller than that of the body **512.** In addition to the Qwerty keyboard **528,** the sliding member **522** is further provided with a navigator button **527** and two special function keys **525** above the Qwerty keyboard **528.** The body **512** is provided with an LCD display **513** and a mobile phone key pad **508** below the LCD display **513.** A pivot axle **502** is provided at a lower, left corner of the body **512** and sliding member **522.** When the body **512** is lengthwise alignedly mounted on the sliding member **522,** the lower end of the sliding member **522** is aligned with the lower end of the body **512,** and the upper end of the sliding member **522** is located within a bottom recess **518** of the body **512,** as shown in **FIG. 15B.** After the sliding member **522** is rotated relative to the body **512** to the position of **FIG. 15C,** the Qwerty keyboard **528** is located relative to the body **512** in a manner the same as that of the embodiment of **FIG. 14B;** however, the navigator button **527** is located beside a right side of the body **512,** and the special function keys **525** are located beside a left side of the body **512.** In this embodiment, at the closed position, the handheld electronic device is used as a mobile phone, and at the opened position, as a e-mail machine.

Further referring to **FIGs. 16A, 16B,** and **16C,** a handheld electronic device in accordance with a ninth embodiment of the present invention is shown. In this embodiment, the body **530** has a length smaller than that of the sliding member **540.** The body **530** has a display **531** thereon and several operating buttons **532** below the display **531.** The sliding member **540** has a Qwerty keyboard **544** thereon. When the body **530** is pivotably mounted on the sliding member **540** about a pivot axle **502** and lengthwise aligned therewith, an upper portion of the sliding member **540** is hidden below the body **530,** while a lower portion of the sliding member **540** is exposed, as shown in **FIG. 16B.** At this position, the handheld electronic device is mainly used as a mobile phone, and the keys at the exposed lower portion can be used as a standard mobile phone keypad **548** for entering telephone number or other telephone operations. When the sliding member **540** is rotated relative to the body **530** about the pivot axle **502** to reach the position of **FIG. 16C,** the Qwerty keyboard **544** is located relative to the body in a manner like that of the embodiment of **FIG. 14B** so that a user can easily use the Qwerty keyboard **544** for typing work. At this position, the handheld electronic device is mainly used as an e-mail machine.

**FIG. 16D** shows a variation of the ninth embodiment of the present invention. In order to reinforce the connection between the body **550** and the sliding member **560,** the body **550** is integrally formed with a base **552** supporting the sliding member **560** so that a reliable connection between the body **550** and the sliding member **560** can be always ensured. The body **550** defines a cavity **554** for receiving an upper portion of the sliding member **560** therein when the sliding member **560** is at the closed position, as shown in **FIG. 16D.**

Referring to **FIGs. 17A, 17B,** and **17C,** a handheld electronic device in accordance with a tenth embodiment of the present invention is shown. In this embodiment, the body **610** and the sliding member **620** have the same size and shape; thus, when the body **610** is pivotably mounted on the sliding member **620** about the pivot **602,** the sliding member **620** is hidden below the body **610.** The body **610** is provided with a groove **630** along which the pivot axle **602** can move therein. Therefore, unlike the embodiment of **FIGs. 14A and 14B,** in this embodiment, the sliding member **620** can move vertically downwardly relative to the body **610** before the sliding member **620** is rotated relative to the body **610.** After the sliding member **620** is moved downwardly relative to the body **610** to reach the position of **FIG. 17B,** twelve keys **626** on the sliding member **620** are exposed and a user can use the keys as a mobile phone keypad. At the position of the **FIG. 17B,** the handheld electronic device is mainly used as a mobile phone. After the sliding member **620** is rotated relative to the body **610,** a touch pad **628** on the sliding member **620** is shown so that a user can easily use the handheld electronic device to edit e-mail or other works needing text input by using the touch pad.

Referring to **FIGs. 18A** and **18B,** a handheld electronic device in accordance with an eleventh embodiment of the present invention is illustrated. In this embodiment, the body **710** is provided with an LCD display **711,** five operating buttons **716** below the LCD display **711,** and a mobile phone keypad **718** under the operating buttons **716.** The body **710** and the sliding member **720** are pivotably connected together at a pivot axle **702.** When the body **710** and the sliding member **720** are lengthwise aligned, the handheld electronic device is used as a mobile phone. The pivot axle **702** so connects the sliding member **720** and the body **710** that when the sliding member **720** rotates relative to the body **710** for 90 degrees, the sliding member **720** extends across a lower end of the body **710** to cause the handheld electronic device to have a cross configuration **(FIG. 18B).** In this configuration, the keys on the mobile phone keypad **718** cooperate with keys **726** on the sliding member to form a Qwerty keyboard **728** so that a user can easily use the handheld electronic device to enter an e-mail or edit a text.

Referring to **FIGs. 19A** and **19B,** a practical application of the handheld electronic device of the fifth embodiment of **FIGs. 10A~11B** as a wireless PDA phone is shown. The body **810** includes a display **814** and five operating buttons **824** under the display **814.** The sliding member **820** is provided with a Qwerty keyboard **826** thereon. The body **810** has a length shorter than that of the sliding member **820.** The body **810** is pivotably mounted on the sliding member **820** about the pivot axle **802.** When the body **810** is lengthwise aligned with the sliding member **820,** twelve keys **825** of the Qwerty keyboard **826** are exposed for use as a mobile phone keypad. In this position **(FIG. 19A)** the handheld electronic device is used as a mobile phone. After the sliding member **820** is rotated 180 degrees clockwise relative to the body **810,** the sliding member **820** is juxtaposed at a left side of the body **820** with upper and lower end portions of the keyboard **826** located above and below upper and lower ends of the body **810,** respectively. At this position **(FIG. 19B),** the handheld electronic device is mainly used as an e-mail/Internet machine for reading, editing and sending e-mails and Internet browsing. In practical use, the handheld electronic device of **FIG. 19B** should be rotated 90 degrees counterclockwise therefrom so that the landscape display **814** is located above the Qwerty keyboard **826.**

The above description provides a full and complete description of the preferred embodiments of the present invention. Various modifications, alternate construction, and equivalent may be made by those skilled in the art without changing the scope or spirit of the invention. Accordingly, the above description and illustrations should not be construed as limiting the scope of the invention which is defined by the following claims.

## Claims

1. A handheld electronic device, having a geometric center line, comprising:
a body having a display; and
a sliding member pivotally connecting to a bottom of the first body via a pivot connection, wherein the pivot connection is off of the geometric center line for a distance, the sliding member has a keyboard, the sliding member moves between a first position and a second position relative to the body, where at the first position, the keyboard of the sliding member has at least a portion being hidden below the body, and where at the second position, ends of the sliding member protrude out of lateral sides of the body, respectively.

2. The handheld electronic device as recited in claim **1,** wherein the sliding member rotates from the first position by 90 degrees to the second position.

3. The handheld electronic device as recited in claim **2** further comprising a guiding structure to guide the sliding member moving between the first position and the second position.

4. The handheld electronic device as recited in claim **3,** wherein the guiding structure comprises an engaging member and an arched track wherein the engaging member is movably fitted in the track.

5. The handheld electronic device as recited in claim **1,** wherein the second body rotates from the first position by 180 degrees to the second position.

6. The handheld electronic device as recited in claim **5** further comprising a guiding structure to guide the sliding member moving between the first position and the second position.

7. The handheld electronic device as recited in claim **6,** wherein the guiding structure comprises an engaging member on the sliding member, the engaging member movably fitting in an arched track defined in the bottom of the body.

8. The handheld electronic device as recited in claim **7,** wherein the arched track has a configuration of a semicircle.

9. The handheld electronic device as recited in claim **1,** wherein the sliding member is moved from the first position to the second position by firstly movingly linearly and then rotatably relative to the body.

10. The handheld electronic device as recited in claim **1,** wherein the sliding member is moved from the first position to the second position by firstly moving rotatably and then linearly relative to the body.

11. The handheld electronic device as recited in claim **1,** wherein at the first position, the keyboard on the sliding member has some keys which are exposed under the display.

12. The handheld electronic device as recited in claim **11,** wherein the body has operating buttons under the display, and at the first position, the operating buttons are located between the exposed keys of the keyboard of the sliding member and the display.

13. The handheld electronic device as recited in claim **12,** wherein the body is integrally formed with a base, and the sliding member is supported by the base.

14. The handheld electronic device as recited in claim **1,** wherein the body further comprises a plurality of keys under the display, and at the second position, the keys on the body cooperate with the keyboard of the sliding member to form a Qwerty keyboard.
